# EUROPEAN PATENT APPLICATION

(11) **EP 4 174 095 A1**
(43) Date of publication of application: **03.05.2023**
(21) Application number: 21832917.5
(22) Date of filing: 29.06.2021
(51) Int. Cl.: C08F 8/34, H01M 4/137, H01M 4/1399, H01M 4/60

(54) **SULFUR-MODIFIED POLYACRYLONITRILE, ELECTRODE ACTIVE MATERIAL CONTAINING SAME, SECONDARY BATTERY ELECTRODE CONTAINING SAID ELECTRODE ACTIVE MATERIAL, MANUFACTURING METHOD FOR SAID ELECTRODE, AND NONAQUEOUS ELECTROLYTE SECONDARY BATTERY USING SAID ELECTRODE**

(30) Priority: 29.06.2020 JP 2020111684
(71) Applicant: ADEKA CORPORATION, Arakawa-ku Tokyo 116-8554 (JP)
(72) Inventor: YOKOMIZO, Tomofumi, Tokyo 116-8554 (JP); SHINANO, Hirokatsu, Tokyo 116-8554 (JP); TAKENOUCHI, Hiromi, Tokyo 116-8554 (JP); AKIMOTO, Kensaku, Tokyo 116-8554 (JP); AOYAMA, Yohei, Tokyo 116-8554 (JP)
(74) Representative: Müller-Boré & Partner Patentanwälte PartG mbB
(86) International application number: PCT/JP2021/024479
(87) International publication number: WO 2022/004696

(57) **Abstract**

The present invention provides a sulfur-modified polyacrylonitrile having a total content of sulfur of from 30 mass% to 55 mass% and having a content of free sulfur of from 0.05 ppm by mass to 4 mass% determined by a solvent extraction method, an electrode active material containing the same, an electrode for a secondary battery including the electrode active material, a method of manufacturing the electrode, and a non-aqueous electrolyte secondary battery using the electrode.

## Description

### Technical Field

The present invention relates to a sulfur-modified polyacrylonitrile, an electrode active material containing the same, an electrode for a secondary battery comprising the electrode active material, a method of manufacturing the electrode, and a non-aqueous electrolyte secondary battery using the electrode.

### Background Art

A non-aqueous electrolyte secondary battery such as a lithium ion secondary battery is compact and lightweight, has a high energy density, and can be charged and discharged repeatedly, and hence has been widely used as a power source for a portable electronic device, such as a portable personal computer, a handy video camera, or an information terminal. In addition, an electric vehicle using the non-aqueous electrolyte secondary battery, and a hybrid car utilizing electric power in part of its motive power have been put into practical use in view of environmental problems. Accordingly, in recent years, it has been required that the performance of the secondary battery be further improved.

The characteristics of the non-aqueous electrolyte secondary battery depend on an electrode, a separator, an electrolyte, and the like serving as constituent members of the battery, and research and development have been actively made on the respective constituent members. In the electrode, an electrode active material is important as well as a binder, a current collector material, and the like, and research and development have been actively made on the electrode active material.

A sulfur-modified polyacrylonitrile, which is obtained by subjecting a mixture of polyacrylonitrile and sulfur to heat treatment under a non-oxidizing atmosphere, is known as an electrode active material which has a high charge-discharge capacity and in which the charge-discharge capacity is less reduced along with repetition of charging and discharging (hereinafter sometimes referred to as "cycle characteristics") (see, for example, Patent Documents 1 to 3). The sulfur-modified polyacrylonitrile has been investigated mainly as an electrode active material of a positive electrode, but has also been investigated as an electrode active material of a negative electrode (see, for example, Patent Document 3).

### Citation List

### Patent Document

[Patent Document 1] WO 2010/044437 A1
[Patent Document 2] JP 2014-022123 A
[Patent Document 3] JP 2014-096327 A

### Summary of Invention

### Technical Problem

It has been required that the battery characteristics of the non-aqueous electrolyte secondary battery be further improved, and it has also been required that the electrode active material have higher performance. When the secondary battery is stored in a charged state for a long period of time, the quantity of electricity accumulated is reduced through self-discharge. In particular, the self-discharge is liable to occur at high temperature. The sulfur-modified polyacrylonitrile is known as an electrode active material enabling obtainment of a non-aqueous electrolyte secondary battery that has less self-discharge at normal temperature and is excellent in electric power storage characteristics, but the electric power storage characteristics are insufficient at high temperature.

### Solution to Problem

The inventors of the present invention made extensive investigations, and as a result, found that, when the total of free sulfur in a sulfur-modified polyacrylonitrile falls within a specific range, an electrode having excellent electric power storage characteristics even at high temperature is obtained. Thus, the present invention has been completed. That is, according to one embodiment of the present invention, there is provided a sulfur-modified polyacrylonitrile, which has a total content of sulfur of from 30 mass% to 55 mass%, and has a content of free sulfur of from 0.05 ppm by mass to 4 mass% determined by a solvent extraction method.

### Advantageous Effects of Invention

According to the present invention, a non-aqueous electrolyte secondary battery having a high charge-discharge capacity and excellent electric power storage characteristics even at high temperature can be provided.

### Description of Embodiments

In the present invention, a sulfur-modified polyacrylonitrile is a compound obtained by subjecting polyacrylonitrile and elemental sulfur to heat treatment in a non-oxidizing atmosphere. Polyacrylonitrile may be a homopolymer of acrylonitrile, or may be a copolymer of acrylonitrile and another monomer. In the case where polyacrylonitrile is the copolymer, battery performance is reduced when the content of acrylonitrile is reduced. Accordingly, the content of acrylonitrile in the copolymer is preferably at least 90 mass% or more. Examples of the other monomer include acrylic acid, vinyl acetate, N-vinyl formamide, and N,N'-methylenebis(acrylamide).

The sulfur-modified polyacrylonitrile of the present invention has the features of having a total content of sulfur of from 30 mass% to 55 mass% and having a content of free sulfur of from 0.05 ppm by mass to 4 mass% determined by a solvent extraction method. When the total content of sulfur is less than 30 mass%, a high charge-discharge capacity may not be obtained, and when the total content of sulfur is more than 55 mass%, excellent cycle characteristics may not be obtained. The total content of sulfur in the sulfur-modified polyacrylonitrile of the present invention is preferably from 30 mass% to 45 mass%, more preferably from 35 mass% to 40 mass%. The content of sulfur in the sulfur-modified polyacrylonitrile may be calculated from analysis results using a CHN analyzer capable of analyzing sulfur and oxygen.

Free sulfur is elemental sulfur in the sulfur-modified polyacrylonitrile. When the content of free sulfur in the sulfur-modified polyacrylonitrile of the present invention, which is determined by a solvent extraction method, is less than 0.05 ppm by mass and more than 4 mass%, excellent cycle characteristics at high temperature may not be obtained. The content of free sulfur determined by a solvent extraction method is preferably from 0.05 ppm by mass to 500 ppm by mass, more preferably from 0.07 ppm by mass to 300 ppm by mass, most preferably from 0.1 ppm by mass to 200 ppm by mass.

The solvent extraction method is a method involving extraction of free sulfur in the sulfur-modified polyacrylonitrile with a solvent and quantitative determination thereof. An extraction method may be an immersion extraction method in which immersion of the sulfur-modified polyacrylonitrile in a solvent and separation from an extraction liquid by filtration or the like are repeatedly performed, or may be a continuous extraction method in which a Soxhlet extractor or the like (see, for example, JIS K6234 (Rubber-Determination of free sulfur), ISO 7269 (Rubber-Determination of free sulfur)) is used. The solvent to be used for the extraction is not particularly limited as long as the solvent can extract free sulfur from the sulfur-modified polyacrylonitrile, does not react with elemental sulfur, and does not elute a foreign substance. Examples of the extraction solvent include hexane, toluene, diethyl ether, tetrahydrofuran, methanol, ethanol, acetone, chloroform, and carbon disulfide. Of those, methanol and ethanol are preferred because the elution amount of the foreign substance is small. Elemental sulfur after the extraction may be quantitatively determined by absorption spectroscopy, and a measurement wavelength may be set to 264 nm, which is the absorption local maximum of sulfur. The extraction method and the quantitative determination method may each be any other method as long as accuracy comparable to that in the case of the above-mentioned method can be ensured.

The sulfur-modified polyacrylonitrile of the present invention preferably has a particle diameter of from 0.1 um to 50 um in terms of an average particle diameter. The particle diameter is a diameter on a volume basis, and the diameters of secondary particles are measured by a laser diffraction light scattering method. In the present invention, the "average particle diameter" refers to a 50% particle diameter (D50) measured by a laser diffraction light scattering method. It requires great labor to reduce the average particle diameter of the sulfur-modified polyacrylonitrile to less than 0.1 um, but a further improvement in battery performance cannot be expected. When the average particle diameter of the sulfur-modified polyacrylonitrile is more than 50 µm, peeling or the like of an electrode mixture layer may be liable to occur. The sulfur-modified polyacrylonitrile of the present invention has an average particle diameter of more preferably from 0.5 um to 30 µm, still more preferably from 1 um to 20 µm.

The sulfur-modified polyacrylonitrile of the present invention preferably has a mass loss rate in the range of from 150°C to 350°C of from 0.2 mass% to 15 mass% determined by thermogravimetric analysis. In the thermogravimetric analysis, a heating start temperature is set to 100°C or less, and a temperature increase rate is set to a constant rate of 10°C/min. The sulfur-modified polyacrylonitrile has partial structures represented by the following formulae (1) and (2). The polysulfide structure represented by the formula (1) undergoes desorption of sulfur through heating, and changes into the disulfide structure represented by the formula (2). A mass loss in the range of from 150°C to 350°C determined by thermogravimetric analysis is conceived to be derived from the desorbed sulfur. 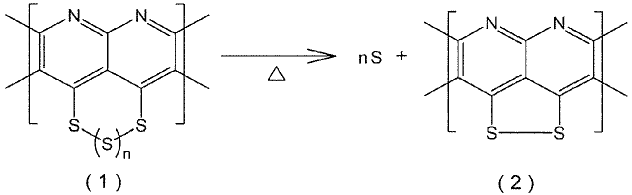 where "n" represents an integer of 1 or more.

As the sulfur-modified polyacrylonitrile has the partial structure represented by the formula (1) in a larger amount, a higher charge-discharge capacity is obtained. However, when the mass loss rate on heating in the range of from 150°C to 350°C determined by thermogravimetric analysis is more than 15 mass%, electric power storage characteristics may be reduced. In addition, when the mass loss rate on heating in the range of from 150°C to 350°C determined by thermogravimetric analysis is less than 0.2 mass%, the charge-discharge capacity may be reduced. The mass loss rate of the sulfur-modified polyacrylonitrile in the range of from 150°C to 350°C determined by thermogravimetric analysis is more preferably from 0.25 mass% to 2 mass%, still more preferably from 0.3 mass% to 1.7 mass%, most preferably from 0.5 mass% to 1.5 mass%.

The sulfur-modified polyacrylonitrile of the present invention is obtained by a manufacturing method involving a heat treatment step of subjecting polyacrylonitrile and elemental sulfur to heat treatment. The blending ratio between polyacrylonitrile and elemental sulfur is as follows: preferably from 100 parts by mass to 1,500 parts by mass, more preferably from 150 parts by mass to 1,000 parts by mass of elemental sulfur with respect to 100 parts by mass of polyacrylonitrile. Polyacrylonitrile and elemental sulfur are each preferably formed of powder because uniform modification with sulfur is achieved. When the particle diameters of polyacrylonitrile and elemental sulfur are too small, it requires great labor to reduce polyacrylonitrile and elemental sulfur to fine particle diameters. When the particle diameters of polyacrylonitrile and elemental sulfur are too large, modification with sulfur becomes insufficient. Accordingly, the particle diameters of polyacrylonitrile and elemental sulfur are each preferably from 1 um to 1,000 um in terms of an average particle diameter.

Polyacrylonitrile and elemental sulfur may be directly subjected to the heat treatment, but polyacrylonitrile and elemental sulfur may be mixed in advance before the heat treatment step and then subjected to the heat treatment because uniform modification with sulfur is achieved.

A temperature of the heat treatment of polyacrylonitrile and elemental sulfur is preferably from 250°C to 550°C, more preferably from 350°C to 450°C. In addition, it is preferred that polyacrylonitrile and elemental sulfur, or an intermediate of the sulfur-modified polyacrylonitrile and sulfur be heated while being mixed with each other so that uniform modification with sulfur is achieved.

The heat treatment is performed under a non-oxidizing atmosphere. The non-oxidizing atmosphere may be an atmosphere in which a gas phase has an oxygen concentration of 5 vol% or less, preferably 2 vol% or less, more preferably an atmosphere substantially free of oxygen, for example, an inert gas atmosphere of nitrogen, helium, argon, or the like, or a sulfur gas atmosphere.

Hydrogen sulfide to be generated through the heat treatment is preferably discharged to an outside of a heating container. In order to discharge hydrogen sulfide, it is appropriate to introduce an inert gas into the heating container and discharge hydrogen sulfide together with the inert gas. When a sulfur vapor outflows together with hydrogen sulfide, the reaction ratio between polyacrylonitrile and elemental sulfur changes, and hence sulfur having outflowed may be refluxed to the heating container or sulfur in the outflowed amount may be added thereto.

The sulfur-modified polyacrylonitrile obtained by the heat treatment contains free sulfur, and free sulfur is removed by heating. The temperature of the heating is preferably from 260°C to 600°C, more preferably from 300°C to 550°C, still more preferably from 350°C to 500°C because, when the temperature of the heating is low, the removal of free sulfur takes a long time, and when the temperature of the heating is too high, the removal involves a high cost. The heating for the removal of free sulfur is preferably performed under an inert gas stream or under reduced pressure conditions, and is more preferably performed under reduced pressure conditions. A pressure in the case of performing pressure reduction is preferably 100 hPa or less, more preferably 50 hPa or less, most preferably 25 hPa or less. In particular, when the mass loss rate on heating in the range of from 150°C to 350°C determined by thermogravimetric analysis is set to from 0.2 mass% to 2 mass%, it is preferred to perform pressure reduction at a pressure of 20 hPa for 10 hours or more in the case of 260°C, at a pressure of 20 hPa for 1 hour or more in the case of 300°C, or at a pressure of 20 hPa for from 0.5 hour to 15 hours in the case of 350°C.

The sulfur-modified polyacrylonitrile of the present invention has a high charge-discharge capacity and excellent cycle characteristics as an electrode active material, and hence can be suitably used as an electrode active material of an electrode for a non-aqueous electrolyte secondary battery. Specifically, the electrode is produced by applying a slurry prepared by adding the sulfur-modified polyacrylonitrile of the present invention, a binder, and a conductive assistant to a solvent onto a current collector, followed by drying to form an electrode mixture layer.

The sulfur-modified polyacrylonitrile of the present invention may be used, as an electrode active material, alone or in combination with another sulfur-based active material. Examples of the other sulfur-based active material include an organic polysulfide (R-S-Sₘ-R: R represents a hydrocarbon group, m=1 to 50), and a carbon-sulfur polymer ((C₂Sₓ)_{y}: x=2.5 to 50, y≥2).

A binder known as a binder for an electrode may be used as the binder. Examples thereof include a styrene-butadiene rubber, a butadiene rubber, polyethylene, polypropylene, polyamide, polyamide imide, polyimide, polyacrylonitrile, polyurethane, polyvinylidene fluoride, polytetrafluoroethylene, an ethylene-propylene-diene rubber, a fluorine rubber, a styrene-acrylic acid ester copolymer, an ethylene-vinyl alcohol copolymer, an acrylonitrile butadiene rubber, a styrene-isoprene rubber, polymethyl methacrylate, polyacrylate, polyvinyl alcohol, polyvinyl ether, carboxymethyl cellulose, sodium carboxymethyl cellulose, methyl cellulose, a cellulose nanofiber, polyethylene oxide, starch, polyvinylpyrrolidone, polyvinyl chloride, and polyacrylic acid.

As the binder, an aqueous binder is preferred because of its low environmental load and excellent binding property, and a styrene-butadiene rubber, sodium carboxymethyl cellulose, and polyacrylic acid are particularly preferred. Those binders may be used alone or in combination thereof.

The content of the binder in the slurry is preferably from 1 part by mass to 30 parts by mass, more preferably from 1 part by mass to 20 parts by mass with respect to 100 parts by mass of the sulfur-modified polyacrylonitrile of the present invention.

A conductive assistant known as conductive assistant for an electrode may be used as the conductive assistant, and specific examples thereof include: carbon materials, such as natural graphite, artificial graphite, carbon black, ketjen black, acetylene black, channel black, furnace black, lamp black, thermal black, a carbon nanotube, a vapor grown carbon fiber (VGCF), graphene, fullerene, and needle coke; metal powders, such as aluminum powder, nickel powder, and titanium powder; conductive metal oxides, such as zinc oxide and titanium oxide; and sulfides, such as La₂S₃, Sm₂S₃, Ce₂S₃, and TiS₂. The average particle diameter of the conductive assistant is preferably from 0.0001 um to 100 µm, more preferably from 0.01 um to 50 µm.

The content of the conductive assistant in the slurry is generally from 0.1 part by mass to 50 parts by mass, preferably from 1 part by mass to 30 parts by mass, more preferably from 2 parts by mass to 20 parts by mass with respect to 100 parts by mass of the sulfur-modified polyacrylonitrile of the present invention.

Examples of the solvent for preparing the slurry include propylene carbonate, ethylene carbonate, diethyl carbonate, dimethyl carbonate, ethylmethyl carbonate, 1,2-dimethoxyethane, 1,2-diethoxyethane, acetonitrile, propionitrile, tetrahydrofuran, 2-methyltetrahydrofuran, dioxane, 1,3-dioxolane, nitromethane, N-methylpyrrolidone, N,N-dimethylformamide, dimethylacetamide, methyl ethyl ketone, cyclohexanone, methyl acetate, methyl acrylate, diethyltriamine, N,N-dimethylaminopropylamine, polyethylene oxide, dimethyl sulfoxide, sulfolane, γ-butyrolactone, water, and an alcohol. The usage amount of the solvent may be adjusted in accordance with a method of applying the slurry. For example, in the case of a doctor blade method, the usage amount of the solvent is preferably from 20 parts by mass to 300 parts by mass, more preferably from 30 parts by mass to 200 parts by mass with respect to 100 parts by mass of a total amount of the sulfur-modified polyacrylonitrile, the binder, and the conductive assistant.

The slurry may contain another component in addition to the above-mentioned components. Examples of the other component include a viscosity modifier, a reinforcing material, and an antioxidant.

A method of preparing the slurry is not particularly limited, but may be, for example, a method using an ordinary ball mill, a sand mill, a bead mill, a pigment disperser, a mortar machine, an ultrasonic disperser, a homogenizer, a rotation/revolution mixer, a planetary mixer, Fill Mix, or Jet Paster.

A conductive material, such as titanium, a titanium alloy, aluminum, an aluminum alloy, copper, nickel, stainless steel, or nickel-plated steel, is used as the current collector. The surfaces of those conductive materials may each be coated with carbon. The current collector has a foil shape, a sheet shape, a mesh shape, or the like. Of those options, aluminum is preferred from the viewpoints of conductivity and cost, and a foil shape is preferred out of the shapes. In the case of a foil shape, a foil thickness is generally from 1 um to 100 µm.

The method of applying the slurry onto the current collector is not particularly limited, and various methods, such as a die coater method, a comma coater method, a curtain coater method, a spray coater method, a gravure coater method, a flexo coater method, a knife coater method, a doctor blade method, a reverse roll method, a brush coating method, and a dip method, may be used. Of those, a die coater method, a doctor blade method, and a knife coater method are preferred because these methods can each be adjusted to the physical properties such as a viscosity and the drying property of the slurry to obtain an application layer with a satisfactory surface state.

The slurry may be applied onto only one surface or both surfaces of the current collector. When the slurry is applied onto both surfaces of the current collector, the slurry may be applied sequentially onto one surface at a time, or may be applied simultaneously onto both surfaces at a time. In addition, the slurry may be applied onto the surface of the current collector continuously or intermittently, or may be applied thereonto in a stripe pattern. The thickness, the length, and the width of the application layer may be appropriately determined depending on the size of a battery.

A method of drying the slurry having been applied onto the current collector is not particularly limited, and various methods, such as drying with warm air, hot air, or low-humidity air, vacuum drying, still standing in a heating furnace or the like, irradiation with far infrared rays, infrared rays, electron beams, or the like, may each be used. With the drying, a volatile component such as the solvent volatilizes from the application film of the slurry, and thus the electrode mixture layer is formed on the current collector. After that, the electrode may be subjected to press processing as required. Examples of the method for the press processing include a mold press method and a roll press method.

An electrode of the present invention has the same configuration as a known electrode. Specifically, the electrode of the present invention comprises a current collector, and an electrode mixture layer formed on the current collector. Moreover, the electrode mixture layer contains the sulfur-modified polyacrylonitrile of the present invention.

The electrode of the present invention can be used for, without particular limitations, a non-aqueous secondary battery comprising a non-aqueous electrolyte. The non-aqueous electrolyte may be any one of a liquid electrolyte, a gel electrolyte, a solid electrolyte, and the like. The electrode of the present invention can be more suitably used for a lithium ion secondary battery. The electrode of the present invention can be used as a positive electrode or a negative electrode.

In general, the non-aqueous electrolyte secondary battery comprises a positive electrode, a negative electrode, a non-aqueous electrolyte, and a separator. When the electrode of the present invention is used as the positive electrode, an electrode comprising a known negative electrode active material may be used as the negative electrode. When the electrode of the present invention is used as the negative electrode, an electrode comprising a known positive electrode active material may be used as the positive electrode. A negative electrode in the case of using the electrode of the present invention as the positive electrode, and a positive electrode in the case of using the electrode of the present invention as the negative electrode are each referred to as "counter electrode".

Examples of the known negative electrode active material include natural graphite, artificial graphite, non-graphitizable carbon, graphitizable carbon, lithium, a lithium alloy, silicon, a silicon alloy, silicon oxide, tin, a tin alloy, tin oxide, phosphorus, germanium, indium, copper oxide, antimony sulfide, titanium oxide, iron oxide, manganese oxide, cobalt oxide, nickel oxide, lead oxide, ruthenium oxide, tungsten oxide, and zinc oxide, and as well, composite oxides, such as LiVO₂, Li₂VO₄, and Li₄Ti₅O₁₂. Those negative electrode active materials may be used alone or in combination thereof.

Examples of the known positive electrode active material include a composite oxide of lithium and a transition metal, a lithium-containing transition metal phosphate compound, and a lithium-containing silicate compound.

A transition metal in the composite oxide of lithium and a transition metal is preferably, for example, vanadium, titanium, chromium, manganese, iron, cobalt, nickel, or copper. Specific examples of the composite oxide of lithium and a transition metal include: composite oxides of lithium and cobalt such as LiCoO₂; composite oxides of lithium and nickel such as LiNiO₂; composite oxides of lithium and manganese, such as LiMnO₂, LiMn₂O₄, and Li₂MnO₃; and compounds obtained by partially substituting primary transition metal atoms of these composite oxides of lithium and transition metals with another metal, such as aluminum, titanium, vanadium, chromium, manganese, iron, cobalt, lithium, nickel, copper, zinc, magnesium, gallium, or zirconium. Specific examples of the composite oxides of lithium and transition metals having primary transition metal atoms partially substituted with another metal include Li_{1.1}Mn_{1.8}Mg_{0.1}O₄, Li_{1.1}Mn_{1.85}Al_{0.05}O₄, LiNi_{0.5}Co_{0.2}Mn_{0.3}O₂, LiNi_{0.8}Co_{0.1}Mn_{0.1}O₂, LiNi_{0.5}Mn_{0.5}O₂, LiNi_{0.80}Co_{0.17}Al_{0.03}O₂, LiNi_{0.80}Co_{0.15}Al_{0.05}O₂, Li (Ni_{1/3}Co_{1/3}Mn_{1/3}) O₂, LiNi_{0.6}Co_{0.2}Mn_{0.2}O₂, LiMn_{1.8}Al_{0.2}O₄, LiNi_{0.5}Mn_{1.5}O₄, and Li₂MnO₃-LiMO₂ (M=Co, Ni, or Mn) .

A transition metal in the lithium-containing transition metal phosphate compound is preferably vanadium, titanium, manganese, iron, cobalt, nickel, or the like, and specific examples of the compound include: iron phosphate compounds, such as LiFePO₄ and LiMnₓFe₁₋ₓPO₄ (0<x<1); iron sulfate compounds such as LiFeSO₄F; cobalt phosphate compounds such as LiCoPO₄; compounds obtained by partially substituting primary transition metal atoms of these lithium-containing transition metal phosphate compounds with another metal, such as aluminum, titanium, vanadium, chromium, manganese, iron, cobalt, lithium, nickel, copper, zinc, magnesium, gallium, zirconium, or niobium; and vanadium phosphate compounds such as Li₃V₂(PO₄)₃-

An example of the lithium-containing silicate compound is Li₂FeSiO₄. Those positive electrode active materials may be used alone or in combination thereof.

The counter electrode may be produced by replacing the above-mentioned sulfur-modified polyacrylonitrile of the present invention with the above-mentioned known negative electrode active material or known positive electrode active material.

Examples of the non-aqueous electrolyte include: a liquid electrolyte obtained by dissolving a supporting electrolyte in an organic solvent; a gel polymer electrolyte in which a supporting electrolyte is dissolved in an organic solvent and gelation is performed with a polymer; a pure polymer electrolyte which is free of an organic solvent and in which a supporting electrolyte is dispersed in a polymer; and an inorganic solid electrolyte.

For example, a hitherto known lithium salt is used as the supporting electrolyte to be used in the liquid electrolyte and the gel polymer electrolyte. Examples thereof include LiPF₆, LiBF₄, LiAsF₆, LiCF₃SO₃, LiCF₃CO₂, LiN (CF₃SO₂)₂, LiN (C₂F₅SO₂)₂, LiN (SO₂F)₂, LiC(CF₃SO₂)₃, LiB(CF₃SO₃)₄, LiB (C₂O₄)₂, LiBF₂ (C₂O₄), LiSbF₆, LiSiF₅, LiSCN, LiClO₄, LiCl, LiF, LiBr, LiI, LiAlF₄, LiAlCl₄, LiPO₂F₂, and derivatives thereof. Of those, one or more kinds selected from the group consisting of: LiPF₆; LiBF₄; LiClO₄; LiAsF₆; LiCF₃SO₃; LiN (CF₃SO₂)₂; LiN (C₂F₅SO₂)₂; LiN(SO₂F)₂; LiC(CF₃SO₂)₃; derivatives of LiCF₃SO₃; and derivatives of LiC(CF₃SO₂)₃ are preferably used.

The content of the supporting electrolyte in the liquid electrolyte or the gel polymer electrolyte is preferably from 0.5 mol/L to 7 mol/L, more preferably from 0.8 mol/L to 1.8 mol/L.

Examples of the supporting electrolyte to be used in the pure polymer electrolyte include LiN (CF₃SO₂)₂, LiN (C₂F₅SO₂)₂, LiN (SO₂F)₂, LiC(CF₃SO₂)₃, LiB (CF₃SO₃)₄, and LiB (C₂O₄)₂.

Examples of the inorganic solid electrolyte include: phosphoric acid-based materials, such as Li₁₊ₓAₓB_{2-y}(PO₄)₃ (A=Al, Ge, Sn, Hf, Zr, Sc, or Y, B=Ti, Ge, or Zn, 0<x<0.5), LiMPO₄ (M=Mn, Fe, Co, or Ni), and Li₃PO₄; composite oxides of lithium, such as Li₃XO₄ (X=As or V), Li₃₊ₓAₓB₁₋ₓO₄ (A=Si, Ge, or Ti, B=P, As, or V, 0<x<0.6), Li₄₊ₓAₓSi₁₋ₓO₄ (A=B, Al, Ga, Cr, or Fe, 0<x<0.4) (A=Ni or Co, 0<x<0.1), Li_{4-3y}Al_{y}SiO₄ (0<y<0.06), Li_{4-2y}Zn_{y}GeO₄ (0<y<0.25), LiAlO₂, Li₂BO₄, Li₄XO₄ (X=Si, Ge, or Ti), and lithium titanate (LiTiO₂, LiTi₂O₄, Li₄TiO₄, Li₂TiO₃, Li₂Ti₃O₇, or Li₄Ti₅O₁₂); compounds each containing lithium and a halogen atom, such as LiBr, LiF, LiCl, LiPF₆, and LiBF₄; compounds each containing lithium and a nitrogen atom, such as LiPON, LiN(SO₂CF₃)₂, LiN (SO₂C₂F₅)₂, Li₃N, and LiN (SO₂C₃F₇)₂; crystals each having a perovskite structure having lithium ion conductivity such as La_{0.55}Li_{0.35}TiO₃; crystals each having a garnet-type structure such as Li₇-La₃Zr₂O₁₃; glasses such as 50Li₄SiO₄·50Li₃BO₃; lithium-phosphorus sulfide-based crystals, such as Li₁₀GeP₂S₁₂ and Li_{3.25}Ge_{0.25}P_{0.75}S₄; lithium-phosphorus sulfide-based glasses, such as 30Li₂S·26B₂S₃·44LiI, 63Li₂S·36SiS₂·1Li₃PO₄, 57Li₂S·38SiS₂·5Li₄SiO₄, 70Li₂S·50GeS₂, and 50Li₂S·50GeS₂; and glass ceramics, such as Li₇P₃S₁₁ and Li_{3.25}P_{0.95}S₄.

As the organic solvent to be used for preparation of the liquid non-aqueous electrolyte to be used in the present invention, organic solvents generally used for the liquid non-aqueous electrolyte may be used alone or in combination thereof. Specific examples thereof include a saturated cyclic carbonate compound, a saturated cyclic ester compound, a sulfoxide compound, a sulfone compound, an amide compound, a saturated chain carbonate compound, a chain ether compound, a cyclic ether compound, and a saturated chain ester compound.

Of those organic solvents, the saturated cyclic carbonate compound, the saturated cyclic ester compound, the sulfoxide compound, the sulfone compound, and the amide compound each play a role in increasing the dielectric constant of the non-aqueous electrolyte by virtue of having a high specific dielectric constant, and the saturated cyclic carbonate compound is particularly preferred.

Examples of the saturated cyclic carbonate compound include ethylene carbonate, 1,2-propylene carbonate, 1,3-propylene carbonate, 1,2-butylene carbonate, 1,3-butylene carbonate, and 1,1-dimethylethylene carbonate.

Examples of the saturated cyclic ester compound include γ-butyrolactone, γ-valerolactone, γ-caprolactone, δ-hexanolactone, and δ-octanolactone. Examples of the sulfoxide compound include dimethyl sulfoxide, diethyl sulfoxide, dipropyl sulfoxide, diphenyl sulfoxide, and thiophene.

Examples of the sulfone compound include dimethylsulfone, diethylsulfone, dipropylsulfone, diphenylsulfone, sulfolane (also referred as tetramethylene sulfone), 3-methylsulfolane, 3,4-dimethylsulfolane, 3,4-diphenysulfolane, sulfolene, 3-methylsulfolene, 3-ethylsulfolene, and 3-bromomethylsulfolene. Of those, sulfolane and tetramethylsulfolane are preferred.

Examples of the amide compound include N-methylpyrrolidone, dimethylformamide, and dimethylacetamide.

Of the above-mentioned organic solvents, the saturated chain carbonate compound, the chain ether compound, the cyclic ether compound, and the saturated chain ester compound can each make battery characteristics such as an output density excellent by virtue of having the capability of reducing the viscosity of the liquid electrolyte, the capability of increasing the mobility of an electrolyte ion, and the like. In addition, each of the compounds has a low viscosity, and hence can improve the performance of the liquid electrolyte at low temperature, and the saturated chain carbonate compound is particularly preferred.

Examples of the saturated chain carbonate compound include dimethyl carbonate, ethyl methyl carbonate, diethyl carbonate, ethyl butyl carbonate, methyl-t-butyl carbonate, diisopropyl carbonate, and t-butyl propyl carbonate.

Examples of the chain ether compound or the cyclic ether compound include dimethoxyethane, ethoxymethoxyethane, diethoxyethane, tetrahydrofuran, dioxolane, dioxane, 1,2-bis(methoxycarbonyloxy)ethane, 1,2-bis(ethoxycarbonyloxy)ethane, 1,2-bis(ethoxycarbonyloxy)propane, ethylene glycol bis(trifluoroethyl) ether, propylene glycol bis(trifluoroethyl) ether, ethylene glycol bis(trifluoromethyl) ether, and diethylene glycol bis(trifluoroethyl) ether. Of those, dioxolane is preferred.

The saturated chain ester compound is preferably a monoester compound or a diester compound having 2 to 8 carbon atoms in total in a molecule thereof. Specific examples of the compound include methyl formate, ethyl formate, methyl acetate, ethyl acetate, propyl acetate, isobutyl acetate, butyl acetate, methyl propionate, ethyl propionate, methyl butyrate, methyl isobutyrate, methyl trimethylacetate, ethyl trimethylacetate, methyl malonate, ethyl malonate, methyl succinate, ethyl succinate, methyl 3-methoxypropionate, ethyl 3-methoxypropionate, ethylene glycol diacetyl, and propylene glycol diacetyl. Of those, methyl formate, ethyl formate, methyl acetate, ethyl acetate, propyl acetate, isobutyl acetate, butyl acetate, methyl propionate, and ethyl propionate are preferred.

Other than the foregoing, for example, acetonitrile, propionitrile, nitromethane, derivatives thereof, and various ionic liquids may each also be used as the organic solvent used for preparation of the liquid electrolyte.

Examples of the polymer to be used in the gel polymer electrolyte include polyethylene oxide, polypropylene oxide, polyvinyl chloride, polyacrylonitrile, polymethyl methacrylate, polyethylene, polyvinylidene fluoride, and polyhexafluoropropylene. Examples of the polymer to be used in the pure polymer electrolyte include polyethylene oxide, polypropylene oxide, and polystyrenesulfonic acid. The blending ratio in the gel electrolyte and a compositing method are not particularly limited, and a known blending ratio and a known compositing method in the technical field may be adopted.

In order to prolong the lifetime of the battery and improve the safety thereof, the non-aqueous electrolyte may contain a known other additive, such as an electrode film forming agent, an antioxidant, a flame retardant, or an overcharge inhibitor. When the other additive is used, the amount of the other additive is generally from 0.01 part by mass to 10 parts by mass, preferably from 0.1 part by mass to 5 parts by mass with respect to 100 parts by mass of the entirety of the non-aqueous electrolyte.

A microporous polymer film generally used for the non-aqueous electrolyte secondary battery may be used as the separator without particular limitations. Examples of the film include films formed of polymer compounds containing, as main components, for example, any of polyethylene, polypropylene, polyvinylidene fluoride, polyvinylidene chloride, polyacrylonitrile, polyacrylamide, polytetrafluoroethylene, polysulfone, polyethersulfone, polycarbonate, polyamide, polyimide, polyethers, such as polyethylene oxide and polypropylene oxide, various celluloses, such as carboxymethyl cellulose and hydroxypropyl cellulose, and poly(meth)acrylic acid and various esters thereof, derivatives thereof, copolymers thereof, and mixtures thereof. Those films may each be coated with a ceramic material, such as alumina or silica, magnesium oxide, an aramid resin, or polyvinylidene fluoride.

Those films may be used alone or as a multi-layer film in which those films are laminated on each other. Further, various additives may be used in each of those films, and the kind and content thereof are not particularly limited. Of those films, a film formed of polyethylene, polypropylene, polyvinylidene fluoride, or polysulfone is preferably used for the secondary battery to be manufactured by a method of manufacturing the secondary battery. When the non-aqueous electrolyte is the pure polymer electrolyte or the inorganic solid electrolyte, the separator may not be incorporated.

The shape of the secondary battery is not particularly limited, and may be various shapes, such as a coin shape, a cylindrical shape, a rectangular shape, and a laminate shape.

A laminate film or a metal container may be used as an exterior member of the secondary battery. The thickness of the exterior member is generally 0.5 mm or less, preferably 0.3 mm or less. Examples of the shape of the exterior member include a flat shape (thin shape), a rectangular shape, a cylindrical shape, a coin shape, and a button shape.

A multi-layer film comprising a metal layer between resin films may be used as the laminate film. The metal layer is preferably aluminum foil or aluminum alloy foil for weight saving. For example, a polymer material, such as polypropylene, polyethylene, nylon, or polyethylene terephthalate, may be used for the resin film. The laminate film may be sealed through thermal fusion and formed into the shape of the exterior member.

The metal container may be formed of, for example, stainless steel, aluminum, or an aluminum alloy. The aluminum alloy is preferably an alloy containing an element, such as magnesium, zinc, or silicon. When the content of a transition metal, such as iron, copper, nickel, or chromium, in aluminum or the aluminum alloy is set to 1% or less, the long-term reliability and heat dissipation property of the battery under a high-temperature environment can be dramatically improved.

### Examples

Now, the present invention is described in more detail by way of the Examples and the Comparative Examples. However, the present invention is not limited to the Examples below. "Part(s)" and "%" in Examples are by mass unless otherwise specified.

Raw material PAN mixture: 10 parts by mass of polyacrylonitrile powder (manufactured by Sigma-Aldrich, average particle diameter: 200 um) and 30 parts by mass of sulfur powder (manufactured by Sigma-Aldrich, average particle diameter: 200 µm) were mixed with a mortar, and the mixture was used as a raw material for a sulfur-modified polyacrylonitrile in each of Production Examples 1 to 4.

### [Production Example 1]

A sulfur-modified polyacrylonitrile was produced by a method in conformity with Production Examples of JP 2013-054957 A. Specifically, 20 g of the raw material PAN mixture was loaded in a bottomed cylindrical glass tube having an outer diameter of 45 mm and a length of 120 mm, and a silicone plug comprising a gas introduction tube and a gas discharge tube was then installed in an opening of the glass tube. After the air in the inside of the glass tube was replaced with nitrogen, a lower portion of the glass tube was placed in a crucible-type electric furnace, and heated at 400°C for 1 hour while hydrogen sulfide to be generated was removed by introducing nitrogen from the gas introduction tube. A sulfur vapor is refluxed by being condensed at an upper portion or a lid portion of the glass tube. The resultant intermediate product was placed in a glass tube oven at 260°C. After pressure reduction was performed, the intermediate product was heated for 3 hours at 20 hPa, to thereby remove sulfur therefrom. The resultant sulfur-modified product was pulverized with a ball mill, and was then classified with a sieve. Thus, a sulfur-modified polyacrylonitrile SPAN 1 having an average particle diameter of 10 um was obtained.

### [Production Example 2]

The same operations as in Production Example 1 were performed except that the time for removal of sulfur from the intermediate product in Production Example 1 was changed from 3 hours to 24 hours. Thus, a sulfur-modified polyacrylonitrile SPAN 2 was obtained.

### [Production Example 3]

The same operations as in Production Example 1 were performed except that the temperature for removal of sulfur from the intermediate product in Production Example 1 was changed from 260°C to 300°C. Thus, a sulfur-modified polyacrylonitrile SPAN 3 was obtained.

### [Production Example 4]

The same operations as in Production Example 1 were performed except that the conditions for removal of sulfur from the intermediate product in Production Example 1 were changed from 260°C for 3 hours at a reduced pressure of 20 hPa to 300°C for 24 hours at normal pressure under a nitrogen gas stream. Thus, a sulfur-modified polyacrylonitrile SPAN 4 was obtained.

### [Production Example 5]

A center potion of a glass tube made of heat-resistant glass having an outer diameter of 10 mm and an inner diameter of 6 mm was heated to be expanded. Thus, a volumetric pipette-type core tube made of glass comprising an expanded portion having an outer diameter of 30 mm and a length of 50 mm in a center portion thereof and thin tubes each having an outer diameter of 10 mm and a length of 150 mm at both ends thereof was produced.

5 g of the raw material PAN mixture was loaded in the expanded portion of the core tube, and the core tube was arranged in a tubular electric furnace having a heating portion of 70 mm so as to have an inclination of 5°. After the inside of the core tube was replaced with a nitrogen gas, the raw material PAN mixture was heated at 400°C for 1 hour while being rotated at 1 rotation per minute. Thus, an intermediate product was obtained. Thermal insulation was performed by filling glass wool in gaps of both ends of the tubular electric furnace. During the heating, a nitrogen gas was fed at a flow rate of 100 ml/min from a lower end of the core tube so that a hydrogen sulfide gas to be generated was able to be discharged from an upper end of the core tube. In addition, while a portion to be heated of the core tube was set to the entirety of the expanded portion, sulfur having sublimated and adhered to a thin tube portion was refluxed to the expanded portion by being appropriately heated to be melted.

The resultant intermediate product was placed in a glass tube oven at 300°C. After pressure reduction was performed, the intermediate product was heated for 3 hours at 20 hPa, to thereby remove sulfur therefrom. The resultant sulfur-modified product was pulverized with a ball mill, and was then classified with a sieve. Thus, a sulfur-modified polyacrylonitrile SPAN 5 having an average particle diameter of 10 um was obtained.

### [Production Example 6]

The same operations as in Production Example 5 were performed except that the temperature and time for removal of sulfur from the intermediate product in Production Example 5 were changed from 300°C to 350°C and from 3 hours to 24 hours, respectively. Thus, a sulfur-modified polyacrylonitrile SPAN 6 was obtained.

### [Production Example 7]

The same operations as in Production Example 1 were performed except that the conditions for removal of sulfur from the intermediate product in Production Example 1 were changed from 260°C for 3 hours at a reduced pressure of 20 hPa to 260°C for 24 hours at normal pressure under a nitrogen gas stream. Thus, a sulfur-modified polyacrylonitrile SPAN 7 was obtained.

### [Production Example 8]

The same operations as in Production Example 1 were performed except that the condition for removal of sulfur from the intermediate product in Production Example 1 was changed from 260°C to 180°C. Thus, a sulfur-modified polyacrylonitrile SPAN 8 was obtained.

### [Production Example 9]

The same operations as in Production Example 5 were performed except that the conditions for removal of sulfur from the intermediate product in Production Example 5 were changed from 300°C for 3 hours at a reduced pressure of 20 hPa to 260°C for 24 hours at normal pressure under a nitrogen gas stream. Thus, a sulfur-modified polyacrylonitrile SPAN 9 was obtained.

### [Production Example 10]

The same operations as in Production Example 1 were performed except that the condition for removal of sulfur from the intermediate product in Production Example 1 was changed from 260°C to 180°C. Thus, a sulfur-modified polyacrylonitrile SPAN 10 was obtained.

The total content of sulfur, the content of free sulfur, and the mass loss rate on heating of each of SPAN 1 to SPAN 10 were calculated by the following methods. The results are shown in Table 1. SPAN 1 to SPAN 5, SPAN 8, and SPAN 10 were the sulfur-modified polyacrylonitriles of the present invention, and were hence used as Examples 1 to 7, respectively, and SPAN 6, SPAN 7, and SPAN 9 were used as Comparative Examples 1 to 3, respectively.

### [Total Content of Sulfur]

The total content of sulfur was calculated from the analysis results with a CHN analyzer (manufactured by Elementar Analysensysteme GmbH, model: varioMICROcube) capable of analyzing sulfur and oxygen. The temperatures of a combustion tube and a reduction tube were set to 1,150°C and 850°C, respectively, and a tin boat was used as a sample container.

### [Content of Free Sulfur]

Free sulfur having been extracted in conformity with JIS K6234 was quantitatively determined by absorption spectroscopy using ethanol as a solvent. A measurement wavelength was set to 264 nm.

### [Heating Mass Loss Rate]

Thermogravimetric analysis was performed with a simultaneous thermogravimetric-differential thermal analyzer, and a mass loss rate in the range of from 150°C to 350°C with respect to a weight before heating was used as a mass loss rate on heating. A temperature increase rate was set to 10°C/min.

**Table 1**

| | | Total content of sulfur (mass%) | Content of free sulfur (ppm by mass) | Heating mass loss rate (mass%) |
|---|---|---|---|---|
| SPAN 1 | Example 1 | 42.3 | 680 | 2.6 |
| SPAN 2 | Example 2 | 42.2 | 420 | 1.7 |
| SPAN 3 | Example 3 | 38.1 | 270 | 1.3 |
| SPAN 4 | Example 4 | 39.2 | 3,200 | 1.9 |
| SPAN 5 | Example 5 | 36.9 | 14.8 | 0.82 |
| SPAN 6 | Comparative Example 1 | 36.9 | 0.04 | 0.16 |
| SPAN 7 | Comparative Example 2 | 53.0 | 45,000 | 11.5 |
| SPAN 8 | Example 6 | 51.2 | 35,000 | 7.8 |
| SPAN 9 | Comparative Example 3 | 45.4 | 42,000 | 5.1 |
| SPAN 10 | Example 7 | 50.3 | 28,000 | 5.3 |

### [Production of Electrode]

Electrodes of Examples 1 to 7 and Comparative Examples 1 to 3 were produced by the following method through use of the sulfur-modified polyacrylonitriles of Examples 1 to 7 and Comparative Examples 1 to 3, respectively.

92.0 Parts by mass of the sulfur-modified polyacrylonitrile serving as an electrode active material, 3.5 parts by mass of acetylene black (manufactured by Denka Company Limited) and 1.5 parts by mass of a carbon nanotube (manufactured by Showa Denko K.K., product name: VGCF) serving as conductive assistants, 1.5 parts by mass of a styrene-butadiene rubber (aqueous dispersion, manufactured by Zeon Corporation) and 1.5 parts by mass of carboxymethyl cellulose (manufactured by Daicel Fine Chem Ltd.) serving as binders, and 120 parts by mass of water serving as a solvent were mixed with each other with a rotation/revolution mixer to prepare a slurry. The slurry composition was applied onto a current collector formed of stainless-steel foil (thickness: 20 um) by a doctor blade method and dried at 90°C for 3 hours. After that, the electrode was cut into a predetermined size and subjected to vacuum drying at 120°C for 2 hours. Thus, a disc-shaped electrode was produced.

### [Production of Positive Electrode 1]

90.0 Parts by mass of Li (Ni_{1/3}Co_{1/3}Mn_{1/3})O₂ (manufactured by Nihon Kagaku Sangyo Co., Ltd., product name: NCM 111, hereinafter referred to as "NCM") serving as a positive electrode active material, 5.0 parts by mass of acetylene black (manufactured by Denka Company Limited) serving as a conductive assistant, and 5.0 parts by mass of polyvinylidene fluoride (manufactured by Kureha Corporation) serving as a binder were mixed and dispersed in 100 parts by mass of N-methylpyrrolidone with a rotation/revolution mixer to prepare a slurry. The slurry composition was applied onto a current collector formed of aluminum foil (thickness: 20 um) by a doctor blade method and dried at 90°C for 3 hours. After that, the electrode was cut into a predetermined size and subjected to vacuum drying at 120°C for 2 hours. Thus, a disc-shaped positive electrode 1 was produced.

### [Production of Negative Electrode 1]

Metal lithium having a thickness of 500 µm was cut into a predetermined size. Thus, a disc-shaped negative electrode 1 was produced.

### [Preparation of Non-aqueous Electrolyte]

An electrolyte solution was prepared by dissolving LiPF₆ at a concentration of 1.0 mol/L in a mixed solvent consisting of 50 vol% of ethylene carbonate and 50 vol% of diethyl carbonate.

### [Assembly of Battery]

Each of the electrodes of Examples 1 to 7 and Comparative Examples 1 to 3 serving as a positive electrode and the negative electrode 1 serving as a negative electrode were held in a case while a glass filter serving as a separator was sandwiched therebetween. After that, the non-aqueous electrolyte prepared in advance was injected into the case, and the case was hermetically sealed. Thus, a non-aqueous electrolyte secondary battery (a coin-shaped battery having a diameter of ϕ20 mm and a thickness of 3.2 mm) of each of Examples 8 to 14 and Comparative Examples 4 to 6 was produced.

In addition, each of the electrodes of Examples 1 to 7 and Comparative Examples 1 to 3 serving as a negative electrode and the positive electrode 1 serving as a positive electrode were held in a case while a polypropylene fine porous membrane serving as a separator was sandwiched therebetween. After that, the non-aqueous electrolyte prepared in advance was injected into the case, and the case was hermetically sealed. Thus, a non-aqueous electrolyte secondary battery (a coin-shaped battery having a diameter of ϕ20 mm and a thickness of 3.2 mm) of each of Examples 15 to 21 and Comparative Examples 7 to 9 was produced.

### [Evaluation 1: Evaluation as Positive Electrode Active Material (Storage at 50°C)]

The non-aqueous electrolyte secondary batteries of Examples 8 to 14 and Comparative Examples 4 to 6 were each placed in a constant-temperature bath at 25°C, and subjected to 12 cycles of charging and discharging at a charge rate of 0.2C and a discharge rate of 0.2C in which a charge final voltage and a discharge final voltage were set to 3.0 V and 1.0 V, respectively, and measured for a charge-discharge capacity. The battery after the completion of charging at the 11th cycle was stored at 50°C for 2 weeks, and was then discharged. A charge capacity before the storage (a charge capacity at the 11th cycle), a discharge capacity after the storage (a discharge capacity at the 11th cycle), an irreversible capacity (a difference between the charge capacity at the 11th cycle and a charge capacity at the 12th cycle), and a self-discharge capacity (a difference between the charge capacity before the storage and the total of the discharge capacity after the storage and the irreversible capacity) are shown in Table 2. The capacities were each a capacity per mass of the sulfur-modified polyacrylonitrile serving as a positive electrode active material.

**Table 2**

| | Positive electrode | Negative electrode | Charge capacity before storage (mAh/g) | Discharge capacity after storage (mAh/g) | Irreversible capacity (mAh/g) | Self-discharge capacity (mAh/g) |
|---|---|---|---|---|---|---|
| Example 8 | Example 1 | Negative electrode 1 | 642 | 617 | 24 | 1 |
| Example 9 | Example 2 | Negative electrode 1 | 643 | 626 | 15 | 2 |
| Example 10 | Example 3 | Negative electrode 1 | 582 | 567 | 15 | 0 |
| Example 11 | Example 4 | Negative electrode 1 | 583 | 556 | 25 | 2 |
| Example 12 | Example 5 | Negative electrode 1 | 543 | 529 | 14 | 0 |
| Example 13 | Example 6 | Negative electrode 1 | 753 | 727 | 25 | 1 |
| Example 14 | Example 7 | Negative electrode 1 | 739 | 709 | 28 | 2 |
| Comparative Example 4 | Comparative Example 1 | Negative electrode 1 | 543 | 507 | 32 | 4 |
| Comparative Example 5 | Comparative Example 2 | Negative electrode 1 | 779 | 710 | 61 | 8 |
| Comparative Example 6 | Comparative Example 3 | Negative electrode 1 | 667 | 615 | 44 | 8 |

### [Evaluation 2: Evaluation as Positive Electrode Active Material (Storage at 60°C)]

The same operations as in Evaluation 1 were performed except that the temperature of the storage for 2 weeks in Evaluation 1 was changed from 50°C to 60°C. The charge capacity before the storage, the discharge capacity after the storage, and the irreversible capacity are shown in Table 3.

**Table 3**

| | Positive electrode | Negative electrode | Charge capacity before storage (mAh/g) | Discharge capacity after storage (mAh/g) | Irreversible capacity (mAh/g) | Self-discharge capacity (mAh/g) |
|---|---|---|---|---|---|---|
| Example 8 | Example 1 | Negative electrode 1 | 642 | 598 | 42 | 2 |
| Example 9 | Example 2 | Negative electrode 1 | 643 | 620 | 22 | 1 |
| Example 10 | Example 3 | Negative electrode 1 | 582 | 559 | 23 | 0 |
| Example 11 | Example 4 | Negative electrode 1 | 583 | 537 | 45 | 1 |
| Example 12 | Example 5 | Negative electrode 1 | 543 | 520 | 23 | 0 |
| Example 13 | Example 6 | Negative electrode 1 | 753 | 713 | 38 | 2 |
| Example 14 | Example 7 | Negative electrode 1 | 739 | 700 | 37 | 2 |
| Comparative Example 4 | Comparative Example 1 | Negative electrode 1 | 543 | 496 | 34 | 3 |
| Comparative Example 5 | Comparative Example 2 | Negative electrode 1 | 779 | 702 | 65 | 12 |
| Comparative Example 6 | Comparative Example 3 | Negative electrode 1 | 667 | 613 | 47 | 7 |

### [Evaluation 3: Evaluation as Negative Electrode Active Material (Storage at 50°C)]

The same operations as in Evaluation 1 were performed on each of the non-aqueous electrolyte secondary batteries of Examples 15 to 21 and Comparative Examples 7 to 9 except that the charge final voltage and the discharge final voltage were changed to 3.2 V and 0.8 V, respectively. The charge capacity before the storage, the discharge capacity after the storage, and the irreversible capacity are shown in Table 4. The capacities were each a capacity per mass of NCM serving as a positive electrode active material.

**Table 4**

| | Positive electrode | Negative electrode | Charge capacity before storage (mAh/g) | Discharge capacity after storage (mAh/g) | Irreversible capacity (mAh/g) | Self-discharge capacity (mAh/g) |
|---|---|---|---|---|---|---|
| Example 15 | Positive electrode 1 | Example 1 | 112 | 101 | 9 | 2 |
| Example 16 | Positive electrode 1 | Example 2 | 112 | 103 | 6 | 3 |
| Example 17 | Positive electrode 1 | Example 3 | 113 | 104 | 7 | 2 |
| Example 18 | Positive electrode 1 | Example 4 | 112 | 101 | 9 | 2 |
| Example 19 | Positive electrode 1 | Example 5 | 112 | 104 | 7 | 1 |
| Example 20 | Positive electrode 1 | Example 6 | 113 | 100 | 9 | 4 |
| Example 21 | Positive electrode 1 | Example 7 | 113 | 100 | 9 | 4 |
| Comparative Example 7 | Positive electrode 1 | Comparative Example 1 | 113 | 92 | 11 | 10 |
| Comparative Example 8 | Positive electrode 1 | Comparative Example 2 | 112 | 86 | 15 | 11 |
| Comparative Example 9 | Positive electrode 1 | Comparative Example 3 | 112 | 87 | 14 | 11 |

### [Evaluation 4: Evaluation as Negative Electrode Active Material (Storage at 60°C)]

The same operations as in Evaluation 1 were performed except that the temperature of the storage for 2 weeks in Evaluation 3 was changed from 50°C to 60°C. The charge capacity before the storage, the discharge capacity after the storage, and the irreversible capacity are shown in Table 5.

**Table 5**

| | Positive electrode | Negative electrode | Charge capacity before storage (mAh/g) | Discharge capacity after storage (mAh/g) | Irreversible capacity (mAh/g) | Self-discharge capacity (mAh/g) |
|---|---|---|---|---|---|---|
| Example 15 | Positive electrode 1 | Example 1 | 112 | 93 | 11 | 8 |
| Example 16 | Positive electrode 1 | Example 2 | 112 | 100 | 8 | 4 |
| Example 17 | Positive electrode 1 | Example 3 | 113 | 101 | 9 | 3 |
| Example 18 | Positive electrode 1 | Example 4 | 112 | 92 | 13 | 7 |
| Example 19 | Positive electrode 1 | Example 5 | 112 | 100 | 8 | 4 |
| Example 20 | Positive electrode 1 | Example 6 | 113 | 89 | 13 | 11 |
| Example 21 | Positive electrode 1 | Example 7 | 113 | 90 | 13 | 10 |
| Comparative Example 7 | Positive electrode 1 | Comparative Example 1 | 113 | 90 | 13 | 10 |
| Comparative Example 8 | Positive electrode 1 | Comparative Example 2 | 112 | 85 | 16 | 11 |
| Comparative Example 9 | Positive electrode 1 | Comparative Example 3 | 112 | 86 | 15 | 11 |

The non-aqueous electrolyte secondary battery having been charged is reduced in discharge capacity due to the self-discharge and an increase in irreversible capacity, and particularly, the reduction in discharge capacity is larger at high temperature than at low temperature. This is the reason why the discharge capacity after the storage is lower than the charge capacity before the storage in each of Tables 2 to 5.

## Claims

1. A sulfur-modified polyacrylonitrile, which has a total content of sulfur of from 30 mass% to 55 mass%, and has a content of free sulfur of from 0.05 ppm by mass to 4 mass% determined by a solvent extraction method.

2. The sulfur-modified polyacrylonitrile according to claim 1, wherein the sulfur-modified polyacrylonitrile has a mass loss rate on heating in a range of from 150°C to 350°C of from 0.2 mass% to 15 mass% determined by thermogravimetric analysis.

3. An electrode active material, comprising the sulfur-modified polyacrylonitrile of claim 1 or 2.

4. An electrode for a secondary battery, comprising the electrode active material of claim 3.

5. A non-aqueous electrolyte secondary battery, comprising the electrode for a secondary battery of claim 4 as a positive electrode.

6. A non-aqueous electrolyte secondary battery, comprising the electrode for a secondary battery of claim 4 as a negative electrode.

7. A method of manufacturing an electrode for a non-aqueous electrolyte secondary battery comprising an electrode active material containing a sulfur-modified polyacrylonitrile, the method comprising:
a selection step 1 of selecting, as an electrode active material of an electrode for a non-aqueous electrolyte secondary battery, a sulfur-modified polyacrylonitrile having a total content of sulfur of from 30 mass% to 55 mass% and a content of free sulfur of from 0.05 ppm by mass to 4 mass%.

8. A method of manufacturing an electrode for a non-aqueous electrolyte secondary battery comprising an electrode active material containing a sulfur-modified polyacrylonitrile, the method comprising:
a selection step 1 of selecting a sulfur-modified polyacrylonitrile having a total content of sulfur of from 30 mass% to 55 mass% and a content of free sulfur of from 0.05 ppm by mass to 4 mass%; and
a selection step 2 of selecting, as an electrode active material of an electrode for a non-aqueous electrolyte secondary battery, a sulfur-modified polyacrylonitrile having a mass loss rate on heating in a range of from 150°C to 350°C of from 0.2 mass% to 15 mass% determined by thermogravimetric analysis, from the sulfur-modified polyacrylonitriles having been selected in the selection step 1.

9. A use of the sulfur-modified polyacrylonitrile of claim 1 or 2 as an electrode active material.
